(19) Europäisches Patentamt
European Patent Office
Office européen des brevets

(11) **EP 4 066 608 B1**

(12) **EUROPÄISCHE PATENTSCHRIFT**

(45) Veröffentlichungstag und Bekanntmachung des Hinweises auf die Patenterteilung:
**09.10.2024   Patentblatt 2024/41**

(21) Anmeldenummer: **22154693.0**

(22) Anmeldetag: **02.02.2022**

(51) Internationale Patentklassifikation (IPC):
*A01B 63/24* (2006.01)    *A01B 63/00* (2006.01)
*A01B 19/04* (2006.01)    *A01B 21/04* (2006.01)
*A01B 23/02* (2006.01)    *A01B 35/22* (2006.01)
*A01B 39/18* (2006.01)    *A01B 39/22* (2006.01)

(52) Gemeinsame Patentklassifikation (CPC):
**A01B 23/02; A01B 19/04; A01B 21/04; A01B 63/008; A01B 63/24;** A01B 35/22; A01B 39/18; A01B 39/22

(54) **BODENBEARBEITUNGSVORRICHTUNG**

SOIL CULTIVATION DEVICE

DISPOSITIF DE TRAVAIL DU SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2021   DE 102021108388**

(43) Veröffentlichungstag der Anmeldung:
**05.10.2022   Patentblatt 2022/40**

(73) Patentinhaber: **Horsch Maschinen GmbH**
**92421 Schwandorf (DE)**

(72) Erfinder: **Köbler, Manfred**
**92421 Schwandorf (DE)**

(74) Vertreter: **Hannke Bittner & Partner mbB**
**Regensburg**
**Prüfeninger Straße 1**
**93049 Regensburg (DE)**

(56) Entgegenhaltungen:
**EP-A1- 2 868 177          EP-A1- 3 903 549**
**AT-U2- 16 504             DE-A1- 19 831 911**
**US-A1- 2012 227 992       US-A1- 2018 153 084**

EP 4 066 608 B1

**Beschreibung**

Die Erfindung betrifft eine Bodenbearbeitungsmaschine, bevorzugt eine landwirtschaftliche Bodenbearbeitungsmaschine, beispielsweise ein landwirtschaftlicher Hackstriegel, mit einer Rahmenkonstruktion und mit einer Mehrzahl von zueinander beabstandeten Striegelzinken, welche in mehreren Reihen und hintereinander angeordnet sind, wobei die Striegelzinken schwenkbar gegenüber der Rahmenkonstruktion sind und jeder Striegelzinken mit einer Arbeitseinstellungseinrichtung verbunden ist, wobei die Striegelzinken in eine erste Anzahl von Gruppen unterteilt sind, wobei jede Gruppe mit einer zugehörigen Arbeitseinstellungseinrichtung verbunden ist, wobei die Arbeitseinstellungseinrichtung dazu vorgesehen und ausgebildet ist, eine Arbeitseinstellung der Striegelzinken der zugehörigen Gruppe zu verändern,

Es sind aus dem Stand der Technik zur mechanischen Unkrautbekämpfung landwirtschaftliche Hackstriegel bekannt. Deren Wirkprinzip beruht darauf, dass diese Unkräuter ausreißen oder Unkräuter mit Erde verschütten. In der Regel weisen derartige Hackstriegel zudem eine große Arbeitsbreite auf.

Ein derartiger Hackstriegel wurde durch die DE 10 2007 008 616 A1 bereits bekannt. Der Hackstriegel umfasst eine Rahmenkonstruktion mit einer Mehrzahl von Striegelzinken, wobei diese mittels einer sogenannten Zinkendruckverstelleinheit schwenkbar gegenüber der Rahmenkonstruktion gelagert sind, um somit eine Vorspannung der Striegelzinken gegenüber einer Bodenfläche einzustellen. Die Zinkendruckverstelleinheit ist derartig ausgeführt, dass mittels dieser zentral und einheitlich alle Striegelzinken des Hackstriegel verstellt werden, insbesondere auf eine gewünschte Arbeitstiefe der Striegelzinken eingestellt werden. Eine Anpassung der Zinkendruckverstelleinheit erfolgt anhand einer Einstellvorgabe durch eine Bedienperson des Hackstriegel.

Ein weiterer Hackstriegel wurde durch die AT 16504 U2 bekannt. Um einen sich selbst einstellenden Hackstriegel zu schaffen, ist vorgesehen, dass mittels eines Kamerasystems ein durch die Striegelzinken erzeugter Pflanzenverschüttungsgrad erfasst und die Ausrichtung der Striegelzinken anhand dieses Pflanzenverschüttungsgrads auf einen gewünschten Wert angepasst wird. Nachteilig ist jedoch, dass Kamerasysteme zum einen staub- und stoßempfindlich sind, sowie dass eine Verstellung der Striegelzinken zentral und einheitlich über die gesamte Arbeitsbreite des Hackstriegel erfolgt. Weitere bekannte

Bodenbearbeitungsmaschinen sind in den Dokumenten DE 198 31 911 A1, EP 3 903 549 A1 und EP 2 868 177 A1 offenbart.

Es ist demzufolge Aufgabe der vorliegenden Erfindung, eine Bodenbearbeitungsmaschine bereitzustellen, mittels welcher eine Anpassung der Vorspannung der Striegelzinken der jeweiligen Gruppen flexibel und schnell und an die zu bearbeitende landwirtschaftliche Fläche angepasst durchgeführt werden kann.

Diese Aufgabe wird durch eine Bodenbearbeitungsmaschine mit den Merkmalen des Patentanspruches 1 gelöst und ebenso gelöst durch ein Verfahren zum Einstellen von Arbeitseinstellungen von Striegelzinken. Vorteilhafte Ausgestaltungen der Erfindung finden sich in den abhängigen Patentansprüchen.

Kerngedanke der Erfindung ist es daher, eine Bodenbearbeitungsmaschine bereitzustellen, bevorzugt ein landwirtschaftlicher Hackstriegel, mit einer Rahmenkonstruktion und mit einer Mehrzahl von zueinander beabstandeten Striegelzinken, welche in mehreren Reihen und hintereinander angeordnet sind, wobei die Striegelzinken schwenkbar gegenüber der Rahmenkonstruktion sind und jeder Striegelzinken mit einer Arbeitseinstellungseinrichtung verbunden ist, wobei die Striegelzinken in eine erste Anzahl von Gruppen unterteilt sind, wobei jede Gruppe mit einer zugehörigen Arbeitseinstellungseinrichtung verbunden ist, wobei die Arbeitseinstellungseinrichtung dazu vorgesehen und ausgebildet ist, eine Arbeitseinstellung der Striegelzinken der zugehörigen Gruppe zu verändern, wobei die Gruppen $(G_n)$ in einer beliebigen und/oder vordefinierten Weise zu Sektionen $(S_k)$ zusammenfassbar und/oder zusammengefasst sind.

Besonders bevorzugt ist es vorgesehen, dass alle Gruppen einer Sektion eine gemeinsame einstellbare Arbeitseinstellung aufweisen.

Durch ein Zusammenfassen von Gruppen zu einer Sektion ist es möglich, dass durch Ansteuerung, respektive Vorgabe, einer Sektion alle Gruppen dieser Sektion entsprechend gleich angesteuert werden können.

Gemäß einer besonders bevorzugten Ausführungsform ist es vorgesehen, dass die erste Anzahl an Gruppen einer zweiten Anzahl an Sektionen zuordenbar beziehungsweise zusammenfassbar ist, wobei jede Sektion eine Unteranzahl an Gruppen mit den jeweils zugehörigen Arbeitseinstellungseinrichtungen umfasst, wobei alle Gruppen einer Sektion eine gemeinsame einstellbare Arbeitseinstellung aufweisen.

Gemäß einer bevorzugten Ausführungsform ist es dabei vorgesehen, eine Bodenbearbeitungsmaschine, bevorzugt eine landwirtschaftliche Bodenbearbeitungsmaschine, beispielsweise ein landwirtschaftlicher Hackstriegel, bereitzustellen, mit einer Rahmenkonstruktion und mit einer Mehrzahl von zueinander beabstandeten Striegelzinken, welche in mehreren Reihen und hintereinander angeordnet sind, wobei die Striegelzinken schwenkbar gegenüber der Rahmenkonstruktion sind und jeder Striegelzinken mit einer Arbeitseinstellungseinrichtung verbunden ist, wobei die Striegelzinken in n Gruppen unterteilt sind, wobei bevorzugt eine n-te Gruppe mit einer n-ten Arbeitseinstellungseinrichtung verbunden ist, wobei die n-te Arbeitseinstellungseinrichtung dazu vorgesehen und ausgebildet ist, eine Arbeitseinstellung der Striegelzinken der n-ten Gruppe zu verändern, wobei die n Gruppen in k Sektionen aufteilbar sind, wobei jede Sektion m Gruppen mit zugehörigen m Arbeitseinstellungseinrichtungen umfasst, wobei alle Gruppen einer Sektion eine gemeinsame einstellbare Arbeitseinstellung aufweisen.

Unter einer Arbeitseinstellung ist bevorzugt die Arbeitseinstellung eines Striegelzinken zu verstehen. Besonders bevorzugt ist die Arbeitseinstellung zumindest eines ausgewählt aus der Gruppe umfassend eine Vorspannkraft, eine Arbeitstiefe, eine Winkellage, und dergleichen. Die Vorspannkraft, die Arbeitstiefe, die Winkellage und eventuelle weitere Parameter beziehen sich auf die jeweilige Gruppe beziehungsweise Sektion beziehungsweise den jeweiligen Striegel. Die Vorspannkraft wirkt hier auf den Striegelzinken, wenn dieser entlang einer Bodenfläche geführt wird, und wird durch ein entsprechendes Bauteil auf den Striegelzinken ausgeübt. Unter der Arbeitstiefe ist zu verstehen, wie weit der Striegelzinken in die landwirtschaftliche Fläche eindringen kann. Unter der Winkellage ist zu verstehen, wie die Lage des Striegelzinkens im Raum ist, bevorzugt mit Referenz zur Rahmenkonstruktion und/oder zur landwirtschaftlichen Fläche.

Gemäß einer besonders bevorzugten Ausführungsform ist es vorgesehen, dass alle Gruppen einer Sektion durch eine Betätigung der zugehörigen Arbeitseinstellungseinrichtungen eine gleiche Arbeitseinstellungsänderung erfahren, bevorzugt ausgehend von der gemeinsamen Arbeitskrafteinstellung.

Es kann denkbar sein, dass durch eine neue Einteilung der Bodenbearbeitungsmaschine in Gruppen beziehungsweise Sektionen die Gruppen einer Sektion zunächst unterschiedliche Arbeitseinstellungen aufweisen, so dass es durch die Einteilung der Gruppen auf Sektionen denkbar ist, zunächst die Arbeitseinstellungen der Gruppen auf die gemeinsame Arbeitseinstellung einzustellen. Dies kann beispielsweise so durchgeführt werden, dass nach Einteilung in Sektionen und der Vorgabe der gemeinsam einstellbaren Arbeitseinstellung die Arbeitseinstellungseinrichtungen der Gruppen derart angesteuert werden, so dass jede Gruppe die gleiche Arbeitseinstellung aufweist.

Erfindungsgemäß ist demnach eine Bodenbearbeitungsmaschine angegeben und bereitgestellt, welche in Abhängigkeit der jeweiligen vorliegenden Arbeitsbedingungen einstellbar und unterteilbar beziehungsweise aufteilbar ist, so dass eine an die Arbeitsbedingungen möglichst optimale Einstellung der Bodenbearbeitungsmaschine möglich ist.

Die Tatsache, dass eine n-te Gruppe mit einer n-ten Arbeitseinstellungseinrichtung verbunden ist, bedeutet, dass jeder Striegelzinken der n-ten Gruppe mit der n-ten Arbeitseinstellungseinrichtung verbunden ist.

Unter dem Begriff einer Gruppe ist eine Teilmenge aller Striegelzinken der Bodenbearbeitungsmaschine zu verstehen. Beispielsweise ist es denkbar, eine Gruppe hinsichtlich einer Arbeitsbreite zu definieren, das heißt, dass ein Abschnitt der Bodenbearbeitungsmaschine in einer Richtung quer zur Fahrtrichtung, also in einer Breitenrichtung, eine Arbeitsbreite aufweist. Beispielhaft kann es sein, dass die Arbeitsbreite 25 cm, 35 cm, 50 cm, 75 cm und/oder 100 cm beträgt. Denkbar ist ebenso, dass die Arbeitsbreite andere Werte annehmen kann, beispielsweise mehr als 100 cm, wie 200 cm oder 300 cm. Diese Angabe ist nicht abschließend zu verstehen. Es könnte beispielsweise auch denkbar sein, dass ein einziger Striegelzinken eine Gruppe mit einer Arbeitseinstellungseinrichtung darstellt.

Alternativ oder kumulativ kann eine Gruppe auch gebildet sein durch hintereinander und/oder nebeneinander angeordnete Striegelzinken.

Eine Gruppe kann dabei auch mehrere Untergruppen aufweisen, beispielsweise kann eine Untergruppe gebildet sein durch die Striegelzinken der Gruppe, welche an einem ersten Träger der Rahmenkonstruktion nebeneinander angeordnet sind. Auch die Unterteilung in Untergruppen ist nicht abschließend zu verstehen. Die Einteilung der Bodenbearbeitungsmaschine in Gruppen kann bevorzugt geändert beziehungsweise angepasst werden. Dies kann beispielsweise abhängig von den Arbeitsbedingungen sein.

Alternativ oder ergänzend kann vorgesehen sein, dass eine Gruppe von Striegelzinken eine andere Arbeitsbreite aufweist als eine weitere Gruppe von Striegelzinken, insbesondere auf Reihenabstände einer Reihenkultur angepasste Arbeitsbreiten. Das bedeutet beispielsweise, dass eine Gruppe eine Arbeitsbreite aufweist, welche im Wesentlichen einer Breite der Reihenkultur entspricht und die weitere Gruppe eine Arbeitsbreite aufweist, welche im Wesentlichen einer Breite zwischen zwei Reihen der Reihenkultur entspricht.

Gemäß einer Ausführungsform der Erfindung ist es möglich, dass die Gruppen von Striegelzinken derartig ausgeführt sind, dass deren Arbeitsbreite veränderbar ist, beispielsweise mittels entsprechenden Koppelementen oder dergleichen, so dass für verschiedene Reihenabstände von Reihenkulturen jeweils eine erforderliche Arbeitsbreite erreicht wird. Somit wäre es auch denkbar, dass eine Zuteilung von Striegelzinken möglich wird, zu welcher Gruppe beziehungsweise Sektion von Striegelzinken diese gehören sollen.

Es ist möglich, dass jede Gruppe und/oder mehrere Gruppen von Striegelzinken im Wesentlichen einen gleichen Aufbau aufweisen und insbesondere eine im Wesentlichen gleiche Anzahl an Striegelzinken und/oder eine im Wesentlichen gleiche Anordnung an Striegelzinken aufweisen.

Erfindungsgemäß ist es möglich, dass jeder Gruppe eine Arbeitseinstellungseinrichtung zugeordnet ist, welche dazu vorgesehen und ausgebildet ist, die einstellbare gemeinsame Arbeitseinstellung einzustellen.

Die Rahmenkonstruktion kann dabei derart ausgebildet sein, dass zusätzlich zu dem ersten Träger weitere Träger, also ein zweiter Träger, ein dritter Träger, usw. vorgesehen sind, an welchen Striegelzinken angeordnet sein können. Bevorzugt sind die Träger parallel zueinander ausgebildet und erstrecken sich jeweils bevorzugt in der Breitenrichtung, also quer zur Fahrtrichtung.

Unter dem Begriff einer Sektion ist erfindungsgemäß zu verstehen, dass eine Sektion zumindest eine Gruppe, bevorzugter mindestens zwei Gruppen umfasst.

Dabei ist es bevorzugt vorgesehen, dass $n \in \mathbb{N}$ und $1 \leq k < n$ und $m \leq n$. Denkbar wäre es daher, eine Sektion vorzusehen, welche alle Gruppen umschließt, so dass alle Gruppen ganzheitlich hinsichtlich der Arbeitseinstellung einstellbar sind.

Unter dem Begriff der gemeinsamen Arbeitseinstellung wird erfindungsgemäß verstanden, dass jede Gruppe der gleichen Sektion die gleiche Einstellung der Arbeitseinstellung aufweist. Auch bei einer Einstellung der Arbeitseinstellung wird eine gleiche Arbeitseinstellungsänderung durchgeführt, so dass wiederum jede Gruppe der gleichen Sektion die gleiche Arbeitseinstellung aufweisen.

Die Arbeitseinstellungseinrichtung ist bevorzugt durch einen Aktor ausgebildet, wobei die Arbeitseinstellungseinrichtung beziehungsweise der Aktor jeweils als eine motorische Stelleinrichtung gebildet ist, insbesondere durch einen hydraulisch betriebenen Zylinder gebildet ist. Es wären jedoch auch andere Arten und Ausführungsvarianten von motorischen Stelleinrichtungen denkbar, bspw. elektrisch und/oder pneumatisch betriebene Aktoren, Motoren oder dergleichen. Beispielsweise sind weiter auch Linearantriebe denkbar.

Ebenso ist es denkbar, dass die Arbeitseinstellungseinrichtung manuell betätigt werden kann, bevorzugt manuell verstellt werden kann.

Die Arbeitseinstellungseinrichtung kann einfachwirkend sein und bspw. durch einen einfachwirkenden Hydraulikzylinder oder Pneumatikzylinder gebildet sein, die Arbeitseinstellungseinrichtung kann alternativ oder ergänzend doppeltwirkend sein und bspw. durch einen doppeltwirkenden Hydraulikzylinder oder Pneumatikzylinder gebildet sein, gemäß der Ausführungsbeispiele werden jeweils doppeltwirkende Arbeitseinstellungseinrichtungen eingesetzt.

Erfindungsgemäß ist es also vorgesehen, dass eine Sektion eine oder mehrere Gruppen aufweist. Beispielsweise können die Gruppen nebeneinander angeordnet sein, oder auch beliebig in anderer Anordnung zueinander. Es wäre ebenso denkbar, dass beispielsweise jede zweite, jede dritte Gruppe oder eine beliebige andere Aufteilung der Gruppen einer Sektion zugeordnet ist, oder jede andere denkbare Kombination.

Gemäß einer besonders bevorzugten Ausführungsform ist es vorgesehen, dass alle Gruppen einer Sektion durch eine Betätigung der zugehörigen Arbeitseinstellungseinrichtungen gleichzeitig eine gleiche Arbeitseinstellungsänderung erfahren.

Dies bedeutet, dass bei einer Änderung der einstellbaren Arbeitseinstellung für eine Sektion die Arbeitseinstellungseinrichtungen jeder Gruppe der Sektion gleichzeitig, oder anders gesagt simultan, angesteuert werden, um die jeweilige Arbeitseinstellung jeder Gruppe einzustellen. Dabei ist die Einstellung derart, dass die Arbeitseinstellung einer Gruppe einer Sektion gleich ist zu jeder weiteren Gruppe der Sektion.

Durch die gleichzeitige Einstellung kann eine homogene Bearbeitung erreicht werden.

Alternativ wäre es ebenso denkbar, dass die Arbeitseinstellungseinrichtungen jeder Gruppe einer Sektion abhängig von unterschiedlichen Vegetationszeitpunkten der Kulturpflanze eingestellt werden kann.

Gemäß einer weiteren bevorzugten Ausführungsform ist es vorgesehen, dass

- die Arbeitseinstellungen mehrerer Sektionen, bevorzugt aller Sektionen, zueinander gleich oder unterschiedlich sind, und/oder
- die Arbeitseinstellungen mehrerer Sektionen, bevorzugt aller Sektionen, abhängig oder unabhängig zueinander einstellbar sind.

Dies kann also bedeuten, dass mehrere Sektionen gleiche Arbeitseinstellungen aufweisen, oder eben unterschiedliche Arbeitseinstellungen. Dies kann abhängig sein von den jeweiligen Arbeitsbedingungen der landwirtschaftlichen Fläche.

Ebenso kann es gemäß dieser Ausführungsform vorgesehen sein, dass die Arbeitseinstellungen einerseits in einer Abhängigkeit stehen oder eben unabhängig voneinander einstellbar sind. Eine abhängige Einstellung wäre beispielsweise beim Befahren von Randflächen der landwirtschaftlichen Fläche denkbar, so dass abhängig von der Gruppe beziehungsweise Sektion, welche den äußersten Bereich der Fläche bearbeitet, als Referenz für die weiteren Gruppen beziehungsweise Sektionen gedacht ist.

Erfindungsgemäß ist es vorgesehen, dass die Bodenbearbeitungsmaschine eine Steuereinheit umfasst, welche dazu vorgesehen und ausgebildet ist, die Arbeitseinstellungseinrichtungen anzusteuern, bevorzugt vollautomatisch anzusteuern. Alternativ ist es ebenso denkbar, dass die Ansteuerung der Arbeitseinstellungseinrichtung manuell durch eine Bedienperson erfolgen kann, wobei die Ansteuerung der Arbeitseinstellungseinrichtung ergänzend mittels der Steuereinheit, vorzugsweise automatisiert, erfolgen kann.

Bevorzugt ist die Steuereinheit mit jeder Arbeitseinstellungseinrichtung zumindest signaltechnisch verbunden.

Die Ansteuerung der Arbeitseinstellungseinrichtungen durch die Steuereinheit ist derart, dass die Steuereinheit Steuersignale an die jeweilige Arbeitseinstellungseinrichtung übermittelt, welche die Arbeitseinstellungseinrichtung dazu veranlasst, die jeweilige Arbeitseinstellung einzustellen.

Um eine flexible und sich automatisch einstellende Bodenbearbeitungsmaschine zu schaffen, kann es gemäß einer Ausführungsform der Erfindung vorgesehen sein, dass zumindest einer Gruppe oder einer Sektion, bevorzugt jeder Gruppe oder jeder Sektion von Striegelzinken eine Erfassungseinrichtung zur Erfassung einer Stellgröße für die jeweiligen Arbeitseinstellungseinrichtungen zugeordnet ist. Die Arbeitseinstellungseinrichtungen sind wirktechnisch bevorzugt mittels der Steuereinheit gekoppelt.

Die Erfassungseinrichtung kann dazu eingerichtet und vorgesehen sein, mittelbar, beispielsweise mittels eines Zwischenglieds, einer Zusatzbaugruppe oder dergleichen, oder unmittelbar, beispielsweise direkt oder ohne Zusatzbaugruppe, eine Stellgröße für die Arbeitseinstellungseinrichtung zu erfassen, wobei dies insbesondere eines von folgendem umfassen kann:

- eine Arbeitstiefe von zumindest einem Striegelzinken; und/oder
- eine Arbeitseinstellung von zumindest einem Striegelzinken (z.B. eine Kraft, mit welcher zumindest ein Striegelzinken entlang einer Bodenfläche geführt wird); und/oder
- eine Winkellage von zumindest einem Striegelzinken (z.B. ein Winkel von zumindest einem Striegelzinken gegenüber der Rahmenkonstruktion und/oder der landwirtschaftlichen Fläche) und/oder
- eine Lage der Rahmenkonstruktion (z.B. eine Winkellage und/oder ein Abstand der Rahmenkonstruktion gegenüber der landwirtschaftlichen Fläche und/oder eine Lage der Rahmenkonstruktion gegenüber zumindest einen Striegelzinken oder eine Gruppe von Striegelzinken) im Raum.

Die Erfassungseinrichtung kann zweckmäßig dazu eingerichtet sein, eine Arbeitseinstellung von zumindest einem Striegelzinken zu erfassen, wobei dies bevorzugt mittels einer Kraftsensorik, wie beispielsweise DMS, Kraftmesssensor, Kraftmessbolzen oder dergleichen, welche bevorzugt am Striegelzinken angebracht und als Stellgröße bevorzugt eine Verformung des Striegelzinken ermittelt, erfolgen kann. Alternativ oder ergänzend könnte die Erfassungseinrichtung zur Erfassung einer Arbeitseinstellung auch der Überlastsicherung und/oder der Arbeitseinstellungseinrichtung zugeordnet sein und durch eine Wegmessensorik (z.B. einem Verfahrweg Arbeitseinstellungseinrichtung) gebildet sein. Auch andere Arten von Sensorik und/oder Anordnungen zur Erfassung einer Arbeitseinstellung wären denkbar. Alternativ oder ergänzend kann bevorzugt auch eine Arbeitstiefenmessung eingesetzt werden, wobei sich eine Arbeitstiefe und eine Arbeitseinstellung jeweils einander Bedingungen und somit bspw. die gleiche Sensorik sowohl zur Erfassung der Arbeitseinstellung als auch zur Erfassung der Arbeitstiefe Verwendung finden kann.

Die Erfassungseinrichtung kann bspw. durch einen oder mehrere Sensoren wie bspw. Winkelsensoren, Kraftsensoren, Drucksensoren oder dergleichen gebildet sein.

Zur gleichmäßigen Höhenführung der Bodenbearbeitungsmaschine entlang der landwirtschaftlichen Fläche können an dieser, respektive der Rahmenkonstruktion, Stützräder angebaut sein, welche Stützräder gegenüber der Rahmenkonstruktion relativ in der Höhe verstellbar sein können. Gemäß einer Ausführungsform der Erfindung kann vorgesehen sein, dass gemäß einer mittels Stützrädern veränderbaren Höhenlage der Bodenbearbeitungsmaschine und bevorzugt der Rahmenkonstruktion, wiederum die Arbeitseinstellungseinrichtungen entsprechend angesteuert werden können, um somit unabhängig von der Höhenlage eine gewünschte Arbeitseinstellung und/oder Arbeitstiefe einhalten zu können. Die Vorgabe der jeweiligen Höhenlage kann manuell und/oder automatisiert erfolgen und die Höhenlage als Stellgröße für die Arbeitseinstellungseinrichtung verwendet werden.

Um ein gewünschtes Arbeitsergebnis mittels der Bodenbearbeitungsmaschine zu erreichen, kann es gemäß einer Ausführungsform der Erfindung vorgesehen sein, dass zumindest einer Gruppe oder einer Sektion von Striegelzinken zumindest eine Überwachungseinrichtung zur Erfassung einer Stellgröße für die jeweilige zugehörige Arbeitseinstellungseinrichtung zugeordnet ist. Bevorzugt ist die Überwachungseinrichtung dazu vorgesehen und ausgebildet, ein Arbeitsergebnis, insbesondere einen Verschüttungsgrad, der Gruppe oder der Sektion zu erfassen und/oder das Vorhandensein einer Reihe von Kulturpflanzen zu erfassen. Anhand der mittels der Überwachungseinrichtung erfassten Stellgröße kann bevorzugt mittels der Steuereinheit die Arbeitseinstellung erhöht werden oder verringert werden oder zumindest weitgehend gleich beibehalten werden.

Die Überwachungseinrichtung kann zweckmäßig bspw. durch zumindest eine Kamera, einen Infrarotsensor, einen Laserscanner, einen Ultraschalsensor oder dergleichen gebildet sein. Der Verschüttungsgrad kann auch ein Erfassen umfassen, wie viel Unkraut sich nach einer Arbeit mit Bodenbearbeitungsmaschine noch auf der landwirtschaftlichen Fläche befindet.

Gemäß der Erfindung ist es vorgesehen, dass die Steuereinheit dazu vorgesehen und ausgebildet ist, eine Auswahl von Gruppen zum Bilden der Sektionen durchzuführen und/oder wobei eine Anzeige- und Eingabevorrichtung vorgesehen ist, welche mit der Steuereinheit zumindest signaltechnisch verbunden ist und welche dazu ausgebildet und vorgesehen ist, mittels Benutzereingaben die Zusammenfassung der Gruppen zu Sektionen durchzuführen.

Besonders bevorzugt kann dies basierend auf den Daten der Überwachungseinrichtung durchgeführt werden.

Eine Auswahl von Gruppen und eine Zusammenfassung der Gruppen zu Sektionen wird anhand der vorliegenden Arbeitsbedingungen durchgeführt, wie etwa der benötigten Arbeitsbreite abhängig von einem Reihenabstand, beispielsweise einem Reihenraster, der Kulturpflanze, der Art der Kulturpflanze und gegebenenfalls dem Wachstumsstadium der Kulturpflanze und der damit zusammenhängenden Arbeitstiefe und dergleichen, wobei die Arbeitsbedingungen beispielsweise durch die Erfassungseinrichtung ermittelbar sind und/oder manuell vorgebbar sind und/oder aus einer Datenbank abrufbar sind. Weiter bevorzugt ist es, dass die Steuereinheit dazu vorgesehen und ausgebildet ist, die Bildung der Gruppen durchzuführen, das heißt, dass beispielsweise durch die Steuereinheit vorgegeben werden kann, welche Arbeitsbreite die jeweilige Gruppe aufweist, und dergleichen.

Diejenigen Gruppen, welche im Wesentlichen gleiche Parameter aufweisen und/oder die gleichen Parameter aufweisen sollen, können beispielsweise als eine Sektion definiert werden.

Gemäß einer weiteren bevorzugten Ausführungsform ist es vorgesehen, dass die Steuereinheit in Abhängigkeit des Ortes der Bodenbearbeitungsmaschine die Auswahl der Gruppen zum Bilden der Sektionen durchführt, wobei bevorzugt eine Positionsbestimmungseinheit, welche mit der Steuereinheit zumindest signaltechnisch verbunden ist, zum Bestimmen des Ortes der Bodenbearbeitungsmaschine vorgesehen ist.

Bevorzugt handelt es sich bei der Positionsbestimmungseinheit um ein GPS-System oder andere Satellitengestützte Positionsbestimmungen.

Gemäß einer alternativen oder ergänzenden Ausführungsform kann vorgesehenen sein, dass die jeweilige Arbeitseinstellungseinrichtung einer Gruppe beziehungsweise einer Sektion anhand einer Position beziehungsweise dem Ort der Gruppe beziehungsweise der Sektion von Striegelzinken, bevorzugt relativ zu der landwirtschaftlichen Fläche, derartig angesteuert werden, dass diese ausgehoben und/oder abgesenkt und in Bodenkontakt gebracht werden und/oder deren Arbeitseinstellung verändert wird. Wobei dies alternativ oder ergänzend insbesondere anhand einer Ackerschlagkarte (z.B. Kartographie, Ackerschlagkartei, etc.) erfolgen kann, d.h. dass anhand der Ackerschlagkarte definiert ist, an welcher Position einer landwirtschaftlichen Fläche die jeweilige Gruppe oder Sektion ausgehoben oder abgesenkt und in Bodenkontakt gebracht werden müssen und/oder welche Arbeitseinstellung und/oder Arbeitstiefe diese an welcher Position einer Ackerfläche aufweisen müssen.

Im Kontext der Erfindung umfasst der Begriff Steuereinheit Bauteile zur Signal- und/oder Befehlsübertragung, bspw. einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Die Signal- und/oder Befehlsübertragung kann drahtlos (z.B. mittels WLAN) erfolgen. Auch ein BUSSystem kann mit eingesetzt werden. Dementsprechend können auch Rechnereinheiten, CPU's und/oder dergleichen umfasst und verstanden sein. Ebenso umfasst sind entsprechend auch in den jeweiligen Sensoren oder Sensoreinheiten oder Sensoranordnungen integrierte Datenverarbeitungseinrichtungen. Ebenso sei darauf hingewiesen, dass die Sensoren / Messeinrichtungen / Erfassungseinrichtungen usw. jeweils als Rückkoppelung für eine Steuer- und/oder Regelgröße herangezogen werden können. Es kann auch denkbar sein, dass weitere Bauteile zur Signal- und/oder Befehlsübertragung vorgesehen sind. Insbesondere können derartige Bauteile vorgesehen sein, welche entsprechende Signale an die Steuereinheit ausgeben, so dass basierend auf den durch die Steuereinheit empfangenen Signale eine entsprechende Steuerung und/oder Regelung durchgeführt werden kann.

Gemäß der Erfindung ist es vorgesehen, dass eine Anzeige- und Eingabevorrichtung vorgesehen ist, welche mit der Steuereinheit zumindest signaltechnisch verbunden ist und welche dazu ausgebildet und vorgesehen ist, mittels Benutzereingaben die Zusammenfassung beziehungsweise Zuordnung der Gruppen in Sektionen durchzuführen und/oder wobei die Steuereinheit (5) dazu vorgesehen und ausgebildet ist, eine Zusammenfassung von Gruppen zu Sektionen durchzuführen.

Die Anzeige- und Eingabevorrichtung kann dabei kabelgebunden oder kabellos mit der Steuereinheit verbunden sein. Die Steuereinheit kann alternativ oder kumulativ in der Anzeige- und Eingabevorrichtung integriert sein. Die im Kontext der Erfindung angeführten Ausführungen hinsichtlich der Steuereinheit können auch für die Anzeige- und Eingabevorrichtung gelten.

Bei der Anzeige- und Eingabevorrichtung kann es sich bevorzugt um ein Terminal, ein Bedientableau, und/oder um ein mobiles Endgerät, beispielsweise ein Tablet oder ein Smartphone handeln, wobei die Anzeige- und Eingabevorrichtung dazu ausgebildet und vorgesehen ist, dass Benutzereingaben möglich sind. Dies kann beispielsweise durch Schalterelemente, Tastenelemente, einer Tastatur und/oder einem Touchscreen und/oder dergleichen ermöglicht sein.

Durch entsprechende Benutzereingaben kann die Anzeige- und Eingabevorrichtung die entsprechenden Signale, welche den Benutzereingaben zugeordnet sind, an die Steuereinheit übermitteln, welche dann in entsprechender Weise die Sektionen ansteuern und/oder die Einteilung der Gruppen in Sektionen und/oder die Bestimmung der Gruppen vornehmen kann. Mittels der Benutzereingaben können die Vorgaben hinsichtlich der Ausbildung der Gruppen und entsprechend der Sektionen an die Steuereinheit übergeben werden.

Weiter kann es denkbar sein, dass vorzugsweise während des Betriebs der Bodenbearbeitungsmaschine, durch entsprechende Benutzereingaben die Ausbildung der Gruppen und der Sektionen mittels der Anzeige- und Eingabeeinheit und dementsprechend mittels der Steuereinheit veränderbar ist, bevorzugt automatisch veränderbar ist.

So kann es denkbar sein, dass Benutzereingaben die Anzeige- und Eingabevorrichtung und/oder die Steuereinheit dazu ausgebildet und vorgesehen sind, die Unterteilung der Gruppen in Sektionen in Abhängigkeit von Benutzereingaben durchzuführen.

Gemäß einer bevorzugten Ausführungsform kann es dabei vorgesehen sein, dass die Benutzereingaben zumindest eines sind, ausgewählt aus der Gruppe umfassend:

- Art einer zu bearbeitenden Kulturpflanze;
- Reihenabstand der zu bearbeitenden Kulturpflanze;
- Wachstumsstadium der Kulturpflanze;
- Grad (z.B. Menge und/oder Wachstumsstadium) eines Unkrautbefalls;
- Spurbreite einer die Bodenbearbeitungsmaschine ziehende Zugmaschine.

Gemäß einer weiteren bevorzugten Ausführungsform kann es vorgesehen sein, dass in einer Speichereinheit der Anzeige- und Eingabeeinheit vordefinierte Sektionen hinterlegt sind, wobei die vordefinierten Sektionen beispielsweise und nicht abschließend definiert sein können durch folgende Parameter:

- Art der zu bearbeitenden Kulturpflanze;
- Reihenabstand der zu bearbeitenden Kulturpflanze;
- Wachstumsstadium der Kulturpflanze;
- Grad (z.B. Menge und/oder Wachstumsstadium) eines Unkrautbefalls.

Der Strichabstand steht dabei bevorzugt in einer Abhängigkeit mit dem Reihenabstand der Kulturpflanze, insbesondere mit dem Strichabstand jeder Gruppe, verbunden.

So wäre es beispielhaft denkbar, dass auf der landwirtschaftlichen Fläche Mais angebaut ist, mit einem definierten Reihenabstand, welcher beispielsweise durch ein entsprechendes Saatgerät vorgegeben ist. Der Einsatz der Bodenbearbeitungsmaschine wird üblicherweise zu einem definierten Zeitpunkt durchgeführt, so dass das Unkraut möglichst effektiv bekämpft werden kann. Der Grad des Unkrautbefalls ist dabei ebenso entscheidend, da entsprechend beispielsweise die Arbeitseinstellung entsprechend angepasst sein muss. Gleiches kann auch für den Strichabstand und weitere Parameter der Bodenbearbeitungsmaschine gelten.

Durch eine Auswahl der vordefinierten Sektionen kann eine schnelle und einfache und an die landwirtschaftliche Fläche angepasste Einstellung der Bodenbearbeitungsmaschine durchgeführt werden.

Denkbar wäre ebenfalls, dass die vordefinierten Sektionen angepasst werden können, falls notwendig. So könnten beispielhaft der Reihenabstand und/oder andere Parameter geändert werden, beispielsweise durch den zuvor beschriebenen Einsatz verschiedener Saatgeräte und/oder verschiedener Zeitpunkte der Bearbeitung und der damit einhergehenden anderen Vegetation, welche auf der landwirtschaftlichen Fläche vorherrscht. Ebenso sind weitere Anpassungen denkbar und sind nicht abschließend zu verstehen. Ebenso ist es darüber hinaus denkbar, dass die geänderten und angepassten vordefinierten Sektionen in der Speichereinheit hinterlegt werden, entweder durch Ersetzen der vorhergehenden vordefinierten Sektionen oder durch Abspeichern, beispielsweise in einer entsprechenden Datenbank, als neue vordefinierte Sektionen, so dass diese zu einem nachfolgenden Zeitpunkt oder auf einer anderen landwirtschaftlichen Fläche abgerufen werden können.

Gemäß einer weiteren bevorzugten Ausführungsform kann es vorgesehen sein, dass die Anzeige- und Eingabeeinheit und/oder die Steuereinheit einen Konfigurationsmodus umfasst, welcher durch die Anzeige- und Eingabeeinheit anzeigbar ist, so dass durch entsprechende Benutzereingaben eine Zusammenfassung und/oder Ausgestaltung der Gruppen und Sektionen durchführbar ist. Dies kann beispielsweise hinsichtlich der Auswahl der Gruppen hinsichtlich der Arbeitsbreite usw. sein und/oder hinsichtlich der Zusammenfassung der Gruppen zu den Sektionen, und/oder weiter bevorzugt hinsichtlich der jeweiligen Arbeitseinstellung der jeweiligen Sektion sein, so dass mittels der Steuereinheit eine entsprechende Ansteuerung der Arbeitseinstellungseinrichtungen durchgeführt wird. Gleiches kann in analoger Weise auch für die jeweiligen Parameter der Arbeitseinstellung vorgesehen sein, beispielsweise Vorspannkraft, Arbeitstiefe, Winkellage und dergleichen.

Mittels des Konfigurationsmodus ist es möglich, dass Gruppen und/oder Sektionen beliebig definiert beziehungsweise zugeordnet werden können, bevorzugt in Abhängigkeit von vorliegenden Arbeitsbedingungen und/oder entsprechenden Benutzereingaben und/oder entsprechenden Daten, welche von der Erfassungseinrichtung erfasst werden und der Steuereinheit und/oder der Anzeige- und Eingabeeinheit übermittelt werden können.

Beispielsweise ist es denkbar, dass der Konfigurationsmodus zumindest eine erste Konfiguration umfasst, wobei auch weitere Konfigurationen denkbar sind, beispielsweise eine zweite Konfiguration. Denkbar ist dabei auch eine beliebige Anzahl an Konfigurationen. Jede Konfiguration umfasst dabei einen Satz an Parametern, beispielsweise die Arbeitseinstellungen hinsichtlich der Arbeitsbedingungen. Besonders bevorzugt unterscheiden sich in diesen Parametern die Konfigurationen untereinander. Weiter bevorzugt können die Konfigurationen hinsichtlich der Parameter manuell verändert werden und/oder automatisch verändert werden, beispielsweise abhängig von den Daten der Erfassungseinrichtung.

Besonders bevorzugt können diese Konfigurationen mittels der Anzeige- und Eingabeeinheit visuell dargestellt werden. Weiter bevorzugt kann eine entsprechende Konfiguration durch einen Benutzer ausgewählt werden, beispielsweise durch Drag & Drop oder dergleichen.

Gemäß einer weiteren bevorzugten Ausführungsform kann es vorgesehen sein, dass bei einem Überschreiten und/oder Unterschreiten der einstellbaren Arbeitseinstellung mindestens einer Gruppe und/oder mindestens einer Sektion ein akustischer und/oder haptischer und/oder optischer Hinweis ausgebbar ist.

Besonders bevorzugt ist die Anzeige- und Eingabeeinheit dazu vorgesehen und ausgebildet, einen haptischen und/oder akustischen und/oder optischen Hinweis auszugeben, wobei auch andere Ausgabeeinheiten denkbar wären, beispielsweise ein Lautsprecher, ein Lichtelement, eine Vibration oder dergleichen.

Besonders bevorzugt ist es denkbar, dass die Anzeige- und Eingabeeinheit dazu vorgesehen und ausgebildet ist, dass angegeben werden kann, welche Gruppe oder welche Sektion die Arbeitseinstellung überschreitet und/oder unterschreitet. Dies kann basierend auf einer Ermittlung einer Ist-Arbeitseinstellung durchgeführt werden, mittels entsprechender Erkennungsmittel, beispielsweise Sensoren oder dergleichen.

Bevorzugt wird der Hinweis nach einer gewissen Zeitspanne des Überschreitens und/oder Unterschreitens angezeigt, beispielsweise nach 30 Sekunden, nach einer Minute, nach 5 Minuten oder dergleichen, wobei jede mögliche Zeitspanne größer als Null Sekunden denkbar ist.

Zur Erreichung einer hohen Bearbeitungsleistung weist die Bodenbearbeitungsmaschine insbesondere eine sich quer zu der Fahrtrichtung, also in Breitenrichtung, erstreckende Arbeitsbreite von beispielsweise 6 Meter, 9 Meter, 12 Meter, 18 Meter oder mehr auf und setzt sich gemäß einer Ausführungsform aus einem Mittelteil und rechts und links des Mittelteils mittels Schwenkachsen schwenkbar am Mittelteil gelagerten Seitenteilen zusammen. Die Seitenteile und/oder das Mittelteil können zum Einhalten einer für eine Straßenfahrt erforderliche Arbeitsbreite entsprechend um die Schwenkachsen in eine Transportposition verschwenkt werden, vorzugsweise mittels eines dazu geeigneten Stellantrieb.

Es kann vorgesehen sein, dass die Bodenbearbeitungsmaschine als eine selbstfahrende oder als eine mittels eines Zugfahrzeug und ein Fahrwerk aufweisende gezogene oder als eine an einem Zugfahrzeug angebaute Bodenbearbeitungsmaschine ausgeführt ist. Die Bodenbearbeitungsmaschine kann zudem eine zumindest teilautonome Bodenbearbeitungsmaschine sein.

Es ist möglich, dass die Striegelzinken drehbar und/oder höhenverstellbar an dem Träger der Rahmenkonstruktion gelagert sind. Vorzugsweise sind zwei oder mehr Striegelzinken beabstandet zueinander an einem Träger drehbar und/oder höhenverstellbar gelagert.

Alternativ oder ergänzend ist es möglich, dass die Striegelzinken an einem Träger drehbar oder drehfest gelagert sind und der Träger drehbar und/oder höhenverstellbar gegenüber der Rahmenkonstruktion an der Rahmenkonstruktion gelagert ist.

Um eine Möglichkeit zu schaffen, auch mit einer eine große Arbeitsbreite aufweisenden Bodenbearbeitungsmaschine eine möglichst flexible Anpassung über die gesamte Arbeitsbreite an unterschiedliche Arbeitsbedingungen zu erreichen, kann es gemäß einer Ausführungsform der Erfindung vorgesehen sein, dass jede Gruppe von Striegelzinken und eine Mehrzahl von nebeneinander an einem Träger gelagerte Striegelzinken umfasst.

Um eine Möglichkeit zu schaffen, die Arbeitseinstellungen von mehreren an hintereinander angeordneten Trägern gelagerten Striegelzinken, insbesondere die Arbeitseinstellungen an Striegelzinken nachgeordneten weiteren Striegelzinken anzupassen und somit zweckmäßig an bereits durch vorgeordnete Striegelzinken bearbeitete Bodenbedingungen anzupassen, kann gemäß einer alternativen oder ergänzenden Ausführungsvariante der Erfindung vorgesehen sein, dass jede Gruppe von Striegelzinken eine Mehrzahl von an zumindest zwei hintereinander angeordneten Trägern gelagerte Striegelzinken umfasst.

Zur Erreichung einer flexiblen Einstellung der Arbeitseinstellungen, etwa im Bereich von Fahrspuren oder im Bereich von Reihenkulturen, kann es gemäß einer Ausführungsform der Erfindung vorgesehen sein, dass jede Gruppe von Striegelzinken eine Mehrzahl von nebeneinander an einem Träger gelagerte Striegelzinken umfasst und eine Mehrzahl von an zumindest zwei hintereinander angeordneten Trägern gelagerte Striegelzinken umfasst.

Die Arbeitseinstellungseinrichtung kann alternativ oder ergänzend mit einer Überlastsicherung gekoppelt, bevorzugt wirktechnisch verbunden, sein. Die Überlastsicherung kann durch ein oder mehrere Federelemente (z.B. Schraubendruckfeder, Schraubenzugfeder, Elastomerlager und/oder dergl.) gebildet sein.

Im Kontext der Erfindung umfasst eine Kopplung der Überlastsicherung mit einer Arbeitseinstellungseinrichtung zweckmäßig insbesondere, dass die Überlastsicherung mit der Arbeitseinstellungseinrichtung verbunden ist. Es wäre jedoch auch denkbar, dass die Überlastsicherung in die Arbeitseinstellungseinrichtung integriert ist und/oder die Arbeitseinstellungseinrichtung entsprechend ausgeführt ist, dass diese auch eine Überlastsicherung mit ausbildet, bspw. eine hydraulische oder pneumatische Überlastsicherung mittels eines Druckspeicher.

Die Überlastsicherung kann insbesondere derartig ausgeführt sein, dass mittels dieser eine Arbeitseinstellung, d.h. beispielsweise eine Kraft, mit welcher ein Striegelzinken entlang einer Bodenfläche geführt wird, erzeugt werden kann.

Die Überlastsicherung kann derartig ausgeführt sein, dass diese in Abhängigkeit eines Arbeitseinstellungswegs eine Arbeitseinstellung erzeugt, d.h. dass die mittels dieser erzeugten Arbeitseinstellung je größer ist, desto weiter diese verspannt wird, wobei der Arbeitseinstellungsweg vorzugsweise durch die Arbeitseinstellungseinrichtung definiert werden kann und wobei die Kraftzunahme direkt proportional oder indirekt proportional zum Arbeitseinstellungsweg sein kann. Zweckmäßig kann somit der Verfahrweg der Arbeitseinstellungseinrichtung auf, die durch den Arbeitseinstellungsweg definierte Arbeitseinstellung abgestimmt sein.

Gelöst wird die vorliegende Aufgabe der Erfindung auch durch ein Verfahren zum Einstellen einer Arbeitseinstellung von Striegelzinken einer Bodenbearbeitungsmaschine, umfassend die Verfahrensschritte:

a) Unterteilen der Bodenbearbeitungsmaschine in Gruppen;
b) Zusammenfassen von Gruppen zu Sektionen, wobei jede Sektion eine Unteranzahl an Gruppen aufweist,
c) Vorgabe einer Soll-Arbeitseinstellung für jede Sektion und Einstellen der Ist-Arbeitseinstellung jeder Gruppe einer jeden Sektion, wenn sich die Ist-Arbeitseinstellung von der Soll-Arbeitseinstellung unterscheidet.

Gelöst wird die vorliegende Aufgabe der Erfindung auch durch ein Verfahren zum Einstellen einer Arbeitseinstellung von Striegelzinken einer Bodenbearbeitungsmaschine,
umfassend die Verfahrensschritte:

a) Unterteilen der Bodenbearbeitungsmaschine in n Gruppen;
b) Bilden von k Sektionen, wobei eine k-te Sektion $m_k$ Gruppen aufweist,
c) Vorgabe einer Arbeitseinstellung für jede Sektion und, falls notwendig, Einstellen der Arbeitseinstellung jeder Sektion.

Das Erfordernis, dass jede Sektion $m_k$ Gruppen umfasst, bedeutet in diesem Zusammenhang, dass eine k-te Sektion eine gewisse Anzahl an Gruppen aufweist und dass die Sektionen im Vergleich zueinander eine unterschiedliche oder gleiche Anzahl an Gruppen aufweisen kann. Der Parameter $m_k$, welcher die Anzahl der Gruppen einer Sektion angibt, ist für jede Sektion separat zu betrachten.

Ein Einstellen der Arbeitseinstellung jeder Sektion ist nur dann notwendig, wenn sich die Vorgabe der Arbeitseinstellung von der aktuell vorliegenden Arbeitseinstellung unterscheidet.

Die Vorgabe der Arbeitseinstellung kann auch als eine Soll-Arbeitseinstellung angesehen werden, und die vorliegende Arbeitseinstellung als eine Ist-Arbeitseinstellung. Unterscheiden sich die Soll-Arbeitseinstellung und die Ist-Arbeitseinstellung, so wird eine Einstellung der Ist-Arbeitseinstellung vorgenommen. Dies wird dabei bevorzugt für jede Gruppe durchgeführt, da die Ist-Arbeitseinstellung durch eine vorhergehende andere Unterteilung in Sektionen dazu führen kann, dass Gruppen einer nun gewählten Sektion unterschiedliche Ist-Arbeitseinstellungen aufweisen.

Zur Ermittlung der Ist-Arbeitseinstellung kann auf entsprechende Sensoren oder Ermittlungsweisen zurückgegriffen werden. Ebenso ist es denkbar, dass eine Differenz der Soll-Arbeitseinstellung zu der Ist-Arbeitseinstellung ermittelt wird, um daraus ein entsprechendes Ansteuersignal zu den Arbeitseinstellungseinrichtung erzeugen zu können, so dass die Arbeitseinstellung automatisch eingestellt werden kann. Alternativ oder kumulativ wäre es denkbar, dass ein Benutzer anhand dieser Differenz manuell die Arbeitseinstellung einstellt.

Eine gleiche Ermittlung und Einstellung ist kumulativ auch für weitere Parameter denkbar, beispielsweise der Arbeitsiefe oder dergleichen.

Weitere vorteilhafte Ausführungsformen ergeben sich aus den Unteransprüchen.

Die im Zusammenhang mit der Bodenbearbeitungsmaschine offenbarten und beschriebenen Merkmale sollen auch im Zusammenhang mit dem Verfahren als offenbart gelten und die Merkmale in korrespondierender Weise als verfahrensseitige Merkmale verwendbar sein. Gleiches gilt auch für die im Zusammenhang mit dem Verfahren offenbarten Merkmale für die Bodenbearbeitungsmaschine.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:

Fig. 1    eine Bodenbearbeitungsvorrichtung gemäß einer bevorzugten Ausführungsform in einer perspektivischen Ansicht;
Fig. 2    einen Ausschnitt der Figur 1 in einer perspektivischen Ansicht;
Fig. 3    den Ausschnitt der Figur 2 in einer Draufsicht;
Fig. 4    den Ausschnitt der Figur 2 in einer Seitenansicht;
Fig. 5    eine Anzeige- und Eingabeeinheit der Bodenbearbeitungsmaschine gemäß einer Ausführungsform;
Fig. 6    eine beispielhafte Einteilung von Gruppen in Sektionen;
Fig. 7    eine weitere beispielhafte Einteilung von Gruppen in Sektionen.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

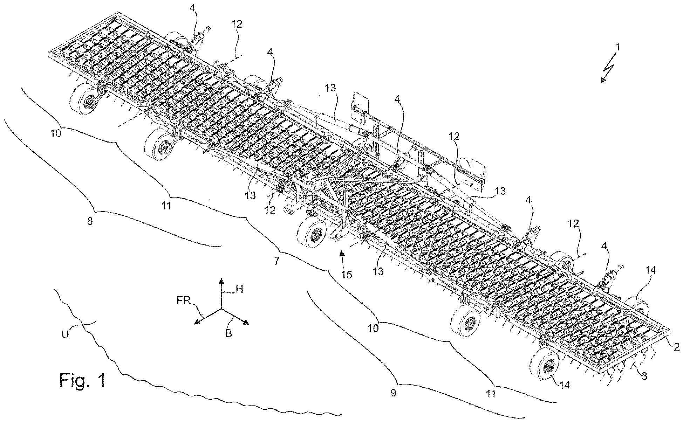

In der Figur 1 ist eine Bodenbearbeitungsvorrichtung 1 gemäß einer bevorzugten Ausführungsform in seiner Gesamtheit in einer perspektivischen Ansicht dargestellt.

Die Bodenbearbeitungsmaschine 1 umfasst dabei eine Rahmenkonstruktion 2 und ist unterteilt in verschiedene Bereiche, vorliegend gemäß einer Ausführungsform in ein Mittelteil 7, ein erstes Seitenteil 8 und ein zweites Seitenteil 9, wobei das erste Seitenteil 8 und das zweite Seitenteil 9 jeweils drehbar um eine Drehachse 12 mit dem Mittelteil 7 verbunden sind.

Jedes Seitenteil 8, 9 umfasst dabei ein erstes Seitenteilsegment 10 und ein zweites Seitenteilsegment 11, wobei das erste Seitenteilsegment 10 drehbar um eine Drehachse 12 mit dem zweiten Seitenteilsegment 11 verbunden ist. Das zweite Seitenteilsegment 11 ist dabei jeweils drehbar mit dem Mittelteil 7 verbunden. Weiter sind gemäß der Figur 1 Stellantriebe 13 vorgesehen, die hydraulisch, pneumatisch oder als Linearantrieb ausgebildet sein können. Durch eine Betätigung der Stellantriebe 13 ist es möglich, die Seitenteile 8, 9 gegenüber dem Mittelteil 7 zu verschwenken.

Vorliegend ist die Bodenbearbeitungsmaschine 1 in einer Breitenrichtung B erstreckend ausgebildet, so dass die Erstreckung in dieser Breitenrichtung B einer Arbeitsbreite der Bodenbearbeitungsmaschine 1 entspricht.

Weiter sind an der Rahmenkonstruktion 2 Stützräder 14 vorgesehen, welche die Rahmenkonstruktion 2 gegenüber einer landwirtschaftlichen Fläche U abstützen und die Rahmenkonstruktion in einem Abstand zu der Fläche U führen.

Es ist dabei denkbar, dass der Abstand der Rahmenkonstruktion 2 zu der Fläche U durch eine Verstellung der Stützräder 14 in einer Höhenrichtung H eingestellt werden kann, beispielsweise manuell durch entsprechenden Umbau oder durch Betätigung von entsprechenden Einstellvorrichtungen (hier nicht gezeigt).

Die Bodenbearbeitungsmaschine 1 kann dabei in zwei Varianten ausgebildet sein. Vorliegend ist die Bodenbearbeitungsmaschine als eine an einem Zugfahrzeug (hier nicht dargestellt) angebaute Bodenbearbeitungsmaschine 1 ausgeführt, wobei hierfür an der Rahmenkonstruktion 2 eine 3-Punkt-Anhängung 15 zugeordnet ist. Es ist jedoch auch denkbar, dass die Bodenarbeitungsmaschine 1 mittels eines Zugfahrzeugs und ein Fahrwerk aufweisende gezogene Bodenbearbeitungsmaschine 1 oder auch als eine selbstfahrende Bodenbearbeitungsmaschinen 1 ausgebildet ist. Die Bodenbearbeitungsmaschine 1 könnte zudem als eine autonome (z.B. teilautonom oder vollautonom) Bodenarbeitungsmaschine 1 ausgeführt sein.

Darüber hinaus sind eine oder mehrere Arbeitseinstellungseinrichtungen 4 dargestellt, welche mit Striegelzinken 3 der Bodenbearbeitungsmaschine 1 wirkverbunden sind. Dies wird in den weiteren Figuren näher erläutert.

Die Bodenbearbeitungsmaschine 1 umfasst eine Mehrzahl von nebeneinander und in mehreren Reihen hintereinander angeordneten Striegelzinken 3, welche jeweils schwenkbar gegenüber der Rahmenkonstruktion 2 gelagert sind und jeweils mit einer Arbeitseinstellungseinrichtung 4 gekoppelt sind.

Die Koppelung der Striegelzinken 3 mit der Arbeitseinstellungseinrichtung 4 erfolgt mit einer Überlastsicherung 17 in Form einer mechanischen Federeinrichtung, beispielsweise eine oder mehrere Schraubendruckfedern und/oder Schraubenzugfedern, welche wiederum jeweils mit einem Verbindungselement 18, beispielsweise ein Drahtseil 18 oder einem anderen mechanischen Verbindungselement, beispielsweise einem Rohr, einer Stange, einem Blech, oder dergleichen mit der Arbeitseinstellungseinrichtung 4 gekoppelt ist.

Die Striegelzinken 3 sind in n Gruppen Gn von Striegelzinken 3 mit einer zugehörigen n-ten Arbeitseinstellungseinrichtung 4 unterteilt.

Gemäß der Ausführungsbeispiele sind die Striegelzinken 3 jeweils drehbar (z.B. gegenüber der Rahmenkonstruktion 2 und nebeneinander an einem Träger 16 gelagert, wobei der Träger 16 jeweils eine Reihe bildet und wobei die Bodenbearbeitungsmaschine 1 gemäß der Ausführungsbeispiele mehrere hintereinander angeordnete Träger 16 respektive Reihen aufweist. Es wäre jedoch auch eine andere Anzahl an Träger 16 respektive Reihen denkbar.

Es sei darauf hingewiesen, dass es auch denkbar wäre, dass die Striegelzinken 3 an dem jeweiligen Träger 16 gelagert sind (z.B. drehbar gelagert sind, drehfest gelagert sind) und der Träger 16 drehbar und/oder höhenverstellbar gegenüber der Rahmenkonstruktion 2 an der Rahmenkonstruktion 2 gelagert ist.

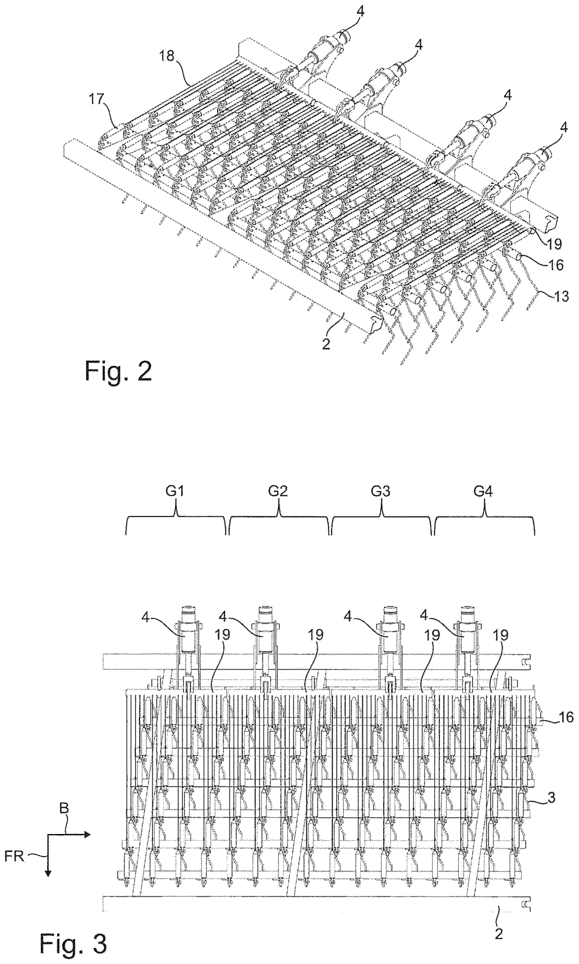

Gemäß der Figuren 2, 3 und 4 ist vorgesehen, dass jede Gruppe Gn von Striegelzinken 3 jeweils eine Mehrzahl von nebeneinander an einem Träger 16 gelagerte Striegelzinken 3 umfasst und eine Mehrzahl von an zumindest zwei hintereinander angeordneten Trägern 16 gelagerte Striegelzinken 3.

Jede Gruppe Gn von Striegelzinken 3 umfasst eine Arbeitseinstellungseinrichtung 4. Mit der Arbeitseinstellungseinrichtung 4 wird jeweils eine Drehbewegung auf einen Schwenkhebel 19 übertragen, mit welchem jeweils die Verbindungselemente 18 zur Koppelung mit der Überlastsicherung 17 derartig verbunden sind, dass anhand einer Drehlage des Schwenkhebel 19 die Drehlage der Striegelzinken 3 und somit deren Arbeitseinstellung und/oder deren Arbeitstiefe verstellbar ist.

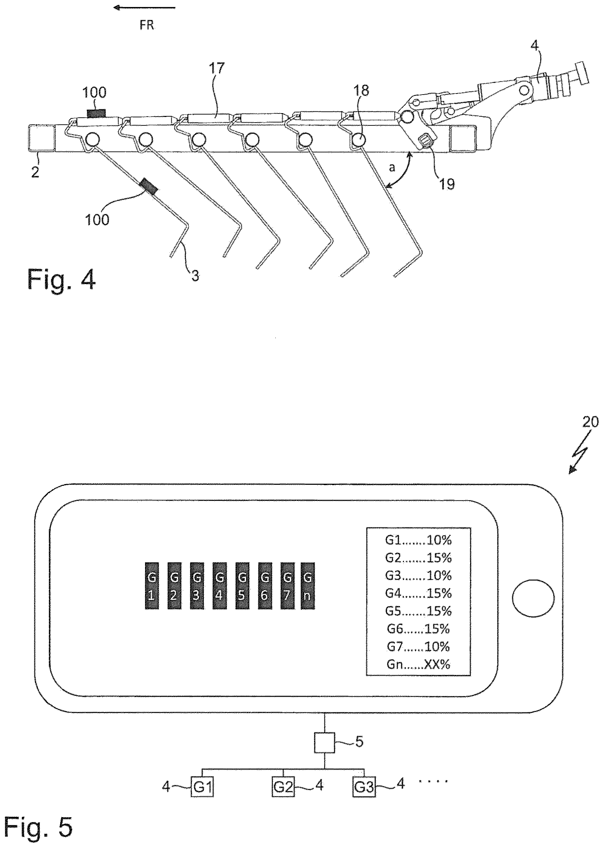

Zur Erfassung einer Stellgröße für die Arbeitseinstellungseinrichtung 4 kann eine Erfassungseinrichtung 100, wie in der Figur 4 dargestellt, vorgesehen sein. Insbesondere kann jeder Gruppe Gn von Striegelzinken 3 jeweils eine Erfassungseinrichtung 100 zugeordnet sein, vorzugsweise können die Erfassungseinrichtungen 100 mit den Arbeitseinstellungseinrichtungen 4 wirktechnisch gekoppelt sein, beispielsweise mittels einer Steuereinheit 5 (hier nicht gezeigt) mit dieser gekoppelt sein.

Die Erfassungseinrichtung 100 kann mittelbar eine Stellgröße für die Arbeitseinstellungseinrichtungen 4 erfassen, wobei hierfür die Erfassungseinrichtung 100 der Überlastsicherung 17 zugeordnet sein kann. Die Erfassungseinrichtung 100 kann unmittelbar eine Stellgröße für die Arbeitseinstellungseinrichtung 4 erfassen, wobei hierfür die Erfassungseinrichtung 100. einem Striegelzinken 3 zugeordnet oder mit diesem verbunden sein kann.

Erfindungsgemäß werden die Gruppen Gn, in welche die Bodenbearbeitungsmaschine 1 unterteilt wurde, in Sektionen Sk aufgeteilt, das heißt, dass jede Gruppe Gn einer Sektion Sk zugeteilt wird. Rein beispielhaft anhand der Figur 5 seien die vorliegenden Gruppen Gn dargestellt, wobei bevorzugt jeder Gruppe Gn eine Arbeitseinstellung, also beispielsweise eine Vorspannkraft und/oder eine Arbeitstiefe und/oder eine Winkellage und/oder dergleichen Parameter, zugeordnet ist. Ist nun gewünscht, die Arbeitseinstellungen zu ändern, so muss dies in dem vorliegenden Fall für jede Gruppe Gn einzeln durchgeführt werden.

Um diesen Aufwand zu verringern und die Zeit zum Einstellen der Gruppen Gn hinsichtlich der Arbeitseinstellungen und gegebenenfalls anderer Parameter zu reduzieren, ist es erfindungsgemäß vorgesehen, die Gruppen Gn in Sektionen Sk aufzuteilen, wobei jeder Sektion Sk eine Arbeitseinstellung zugeordnet ist und daher jeder Gruppe Gn der Sektion Sk, das heißt, dass jede Gruppe Gn einer Sektion Sk die gleiche Arbeitseinstellung und gegebenenfalls anderer Parameter zugeordnet ist.

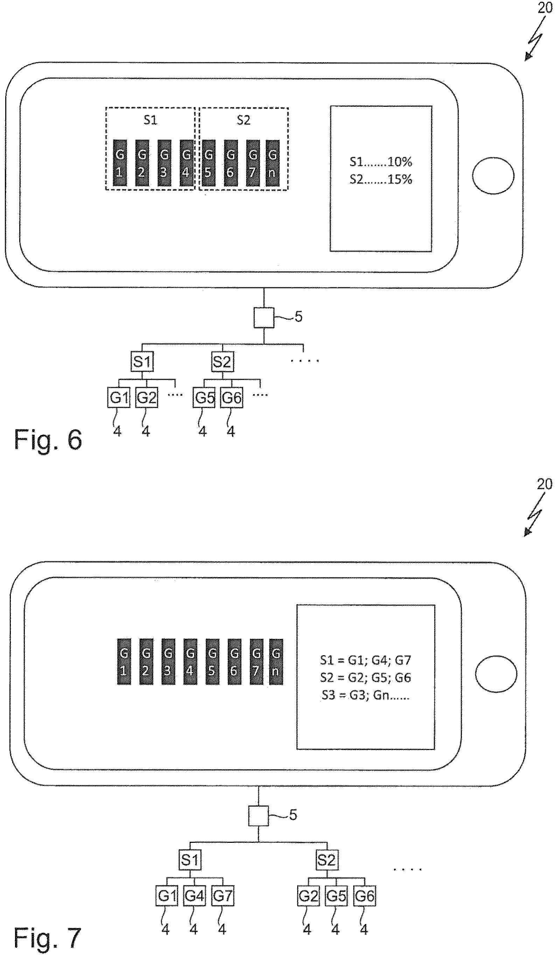

Eine derartige Aufteilung ist beispielhaft der Figur 6 zu entnehmen. Eine beispielhafte alternative Aufteilung ist der Figur 7 zu entnehmen.

Gemäß der Figur 5 ist gemäß einer Ausführungsform eine Anzeige- und Eingabeeinheit 20 vorgesehen, mittels welcher abhängig von Benutzereingaben die Gruppen Gn auswählbar sind und bevorzugt auch einstellbar sind hinsichtlich deren Parameter, beispielsweise Arbeitsbreite. Ebenso kann jeder Gruppe Gn eine Arbeitseinstellung zugeordnet sein, welche gemäß der Figur 5 als eine %-Angabe vorliegt, so dass diese einer entsprechenden prozentualen Veränderung entsprechen kann. Ebenso wäre es denkbar, die Arbeitseinstellung mittels eines Gewichtswerts, beispielsweise Kilogramm, anzugeben. Ebenso denkbar ist es, die %-Angabe und die Gewichtsangabe darzustellen.

Die Steuereinheit 5 ist zumindest signaltechnisch mit der Anzeige- und Eingabeeinheit 20 verbunden, beispielsweise kabelgebunden oder kabellos. Ebenso ist es denkbar, dass die Steuereinheit 5 ein Bestandteil der Anzeige- und Eingabeeinheit 20 ist. Die Steuereinheit 5 übermittelt Steuersignale an die jeweiligen Arbeitseinstellungseinrichtungen 4 beziehungsweise an den entsprechenden Antrieb, Aktor oder dergleichen der Arbeitseinstellungseinrichtung 4, um die Vorspannung der Striegelzinkel 3 jeder Sektion Sk und deren zugeordneten Gruppen Gn einzustellen.

Gemäß der Figur 6, in welcher die Gruppen Gn Sektionen Sk, vorliegend Sektionen S1 und S2, zugeordnet worden sind, wird ein entsprechendes Steuersignal der Steuereinheit 5 an die Sektionen übermittelt, so dass alle Arbeitseinstellungseinrichtungen 4 einer Sektion Sk, beispielsweise Sektion S1, entsprechend mittels des gleichen Steuersignals angesteuert werden können.

**Bezugszeichenliste**

| 1 | Bodenbearbeitungsvorrichtung |
|---|---|
| 2 | Rahmenkonstruktion |
| 3 | Striegelzinken |
| 4 | Arbeitseinstellungseinrichtung |
| 5 | Steuereinheit |
| 6 | Anzeige- und Eingabeeinheit |
| 7 | Mittelteil |
| 8 | erstes Seitenteil |
| 9 | zweites Seitenteil |
| 10 | erstes Seitenteilsegment |
| 11 | zweites Seitenteilsegment |
| 12 | Drehachse |
| 13 | Stellantrieb |
| 14 | Stützrad |
| 15 | Aufhängung |
| 16 | Träger |
| 17 | Überlastsicherung |
| 18 | Verbindungselement |
| 19 | Schwenkhebel |
| 20 | Anzeige- und Eingabeeinheit |
| Gn | Gruppe |
| Sk | Sektion |
| U | landwirtschaftliche Fläche |
| H | Höhenrichtung |
| B | Breitenrichtung |
| FR | Fahrtrichtung |

**Patentansprüche**

1. Bodenbearbeitungsmaschine (1), bevorzugt ein landwirtschaftlicher Hackstriegel, mit einer Rahmenkonstruktion (2) und mit einer Mehrzahl von zueinander beabstandeten Striegelzinken (3), welche in mehreren Reihen und hintereinander angeordnet sind, wobei die Striegelzinken (3) schwenkbar gegenüber der Rahmenkonstruktion (2) sind und jeder Striegelzinken (3) mit einer Arbeitseinstellungseinrichtung (4) verbunden ist, wobei die Striegelzinken (3) in n Gruppen (Gn) mit einer zugehörigen n-ten Arbeitseinstellungseinrichtung (4) unterteilt sind, wobei jede Gruppe (Gn) eine Arbeitseinstellungseinrichtung (4) umfasst und mit der zugehörigen Arbeitseinstellungseinrichtung (4) verbunden ist, wobei die Arbeitseinstellungseinrichtung (4) dazu vorgesehen und ausgebildet ist, eine Arbeitseinstellung der Striegelzinken (3) der zugehörigen Gruppe (Gn) zu verändern, wobei die Bodenbearbeitungsmaschine (1) eine Steuereinheit (5) umfasst, welche dazu vorgesehen und ausgebildet ist, die Arbeitseinstellungseinrichtungen (4) anzusteuern, wobei

   die Gruppen (Gn) in Abhängigkeit von vorliegenden Arbeitsbedingungen in einer beliebigen und/oder vordefinierten Weise zu Sektionen (Sk) zusammenfassbar und/oder zusammengefasst sind, wobei eine Einteilung der Bodenbearbeitungsmaschine (1) in Sektionen veränderbar ist,

wobei die Steuereinheit (5) dazu vorgesehen und ausgebildet ist, eine Zusammenfassung von Gruppen (Gn) zu Sektionen (Sk) durchzuführen, und/oder

wobei eine Anzeige- und Eingabevorrichtung (6) vorgesehen ist, welche mit der Steuereinheit zumindest signaltechnisch verbunden ist und welche dazu ausgebildet und vorgesehen ist, mittels Benutzereingaben die Zusammenfassung der Gruppen (Gn) zu Sektionen (Sk) durchzuführen.

2. Bodenbearbeitungsmaschine nach Anspruch 1,
   **dadurch gekennzeichnet, dass**
   eine erste Anzahl an Gruppen (Gn) einer zweiten Anzahl an Sektionen (Sk) zuordenbar sind, wobei jede Sektion (Sk) eine Unteranzahl an Gruppen (Gn) mit den jeweils zugehörigen Arbeitseinstellungseinrichtungen (4) umfasst, wobei alle Gruppen (Gn) einer Sektion (Sk) eine gemeinsame einstellbare Arbeitseinstellung aufweisen.

3. Bodenbearbeitungsmaschine nach Anspruch 1 oder 2,
   **dadurch gekennzeichnet, dass**
   n Gruppen (Gn) in k Sektionen (Sk) zusammenfassbar und/oder zusammengefasst sind, wobei jede Sektion (Sk) $m_k$ Gruppen (Gn) mit zugehörigen $m_k$ Arbeitseinstellungseinrichtungen (4) umfasst, wobei alle Gruppen (Gn) einer Sektion (Sk) die gemeinsame einstellbare Arbeitseinstellung aufweisen.

4. Bodenbearbeitungsmaschine (1) nach einem der Ansprüche 1 bis 3,
   **dadurch gekennzeichnet, dass**
   alle Gruppen (Gn) einer Sektion (Sk) durch eine Betätigung der zugehörigen Arbeitseinstellungseinrichtung (4) eine gleiche Arbeitseinstellungsänderung erfahren.

5. Bodenbearbeitungsmaschine (1) nach Anspruch 4,
   **dadurch gekennzeichnet, dass**
   alle Gruppen (Gn) einer Sektion (Sk) durch eine Betätigung der zugehörigen Arbeitseinstellungseinrichtungen gleichzeitig eine gleiche Arbeitseinstellungsänderung erfahren.

6. Bodenbearbeitungsmaschine (1) nach einem der Ansprüche 1 bis 5,
   **dadurch gekennzeichnet, dass**

   - die Arbeitseinstellungen mehrerer Sektionen (Sk) zueinander gleich sind, und/oder
   - die Arbeitseinstellungen mehrerer Sektionen (Sk) abhängig oder unabhängig zueinander einstellbar sind.

7. Bodenbearbeitungsmaschine (1) nach einem der Ansprüche 1 bis 6,
   **dadurch gekennzeichnet, dass**
   die Steuereinheit (5) dazu vorgesehen und ausgebildet ist, die Arbeitseinstellungseinrichtungen (4) vollautomatisch anzusteuern.

8. Bodenbearbeitungsmaschine (1) nach einem der Ansprüche 1 bis 7
   **dadurch gekennzeichnet, dass**
   die Anzeige- und Eingabevorrichtung (6) und/oder die Steuereinheit (5) dazu ausgebildet und vorgesehen sind, die Zusammenfassung der Gruppen (Gn) in Sektionen (Sk) in Abhängigkeit von Benutzereingaben durchzuführen.

9. Bodenbearbeitungsmaschine (1) nach Anspruch 8,
   **dadurch gekennzeichnet, dass**
   die Benutzereingaben zumindest eines sind, ausgewählt aus der Gruppe umfassend

   - Art einer zu bearbeitenden Kulturpflanze;
   - Reihenabstand der zu bearbeitenden Kulturpflanze;
   - Wachstumsstadium der Kulturpflanze;
   - Grad eines Unkrautbefalls;
   - Spurbreite einer die Bodenbearbeitungsmaschine (1) ziehende Zugmaschine.

10. Bodenbearbeitungsmaschine (1) nach einem der Ansprüche 1 bis 9,
    **dadurch gekennzeichnet, dass**
    für jede Sektion (Sk) eine Arbeitseinstellung vorgegeben ist, welche automatisch einstellbar ist.

11. Bodenbearbeitungsmaschine (1) nach einem der Ansprüche 1 bis 10,
    **dadurch gekennzeichnet, dass**
    bei einem Überschreiten und/oder Unterschreiten der einstellbaren Arbeitseinstellung mindestens einer Gruppe (Gn) und/oder mindestens einer Sektion (Sk) ein akustischer und/oder haptischer und/oder optischer Hinweis ausgebbar ist.

12. Bodenbearbeitungsmaschine (1) nach einem der Ansprüche 1 bis 11,
    **dadurch gekennzeichnet, dass**
    die Sektionen (Sk) vordefiniert sind und in einer Speichereinheit hinterlegt sind.

13. Bodenbearbeitungsmaschine (1) nach einem der Ansprüche 1 bis 12,
    **dadurch gekennzeichnet, dass**
    die Steuereinheit (5) und/oder die Anzeige- und Eingabeeinheit (20) einen Konfigurationsmodus umfasst, so dass durch entsprechende Benutzereingaben eine Zusammenfassung und/oder Ausgestaltung der Gruppen (Gn) und/oder Sektionen (Sk) durchführbar ist.

14. Verfahren zum Einstellen einer Arbeitseinstellung von Striegelzinken (3) einer Bodenbearbeitungsmaschine (1) nach einem der Ansprüche 1 bis 13, umfassend die Verfahrensschritte:

a) Unterteilen der Bodenbearbeitungsmaschine (1) in Gruppen (Gn);
b) Zusammenfassen von Gruppen (Gn) zu Sektionen (Sk),
c) Vorgabe einer Soll-Arbeitseinstellung für jede Sektion (Sk) und Einstellen der Ist-Arbeitseinstellung jeder Gruppe einer jeden Sektion (Sk), wenn sich die Ist-Arbeitseinstellung von der Soll-Arbeitseinstellung unterscheidet.

**Claims**

1. A soil tillage implement (1), preferably an agricultural hoeing harrow, comprising a frame structure (2) and a plurality of mutually spaced harrow tines (3) which are arranged in several rows and one behind the other, wherein the harrow tines (3) are pivotable relative to the frame structure (2) and each harrow tine (3) is connected to a work setting device (4), wherein the harrow tines (3) are divided into n groups (Gn) with an associated n work setting device (4), wherein each group (Gn) comprises a work setting device (4) and is connected to the associated working setting device (4), wherein the work setting device (4) is provided and designed to change a work setting of the harrow tines (3) of the associated group (Gn), wherein the soil tillage implement (1) comprises a control unit (5) which is provided and designed to control the work setting devices (4), wherein the work setting device (4) is connected to the associated working setting device (4), wherein

the groups (Gn) can be combined and/or are combined into sections (Sk) in any desired and/or predefined manner depending on the working conditions present, wherein a division of the soil tillage implement (1) into sections can be changed,
wherein the control unit (5) is provided and designed to combine groups (Gn) into sections (Sk), and/or
wherein a display and input device (6) is provided, which is connected to the control unit at least by signalling and which is designed and intended to perform the combination of the groups (Gn) into sections (Sk) by means of user inputs.

2. Soil tillage implement according to claim 1, **characterised in that**
a first number of groups (Gn) can be assigned to a second number of sections (Sk), wherein each section (Sk) comprises a sub-number of groups (Gn) with the respectively associated work setting devices (4), wherein all groups (Gn) of a section (Sk) have a common adjustable work setting.

3. Soil tillage implement according to claim 1 or 2, **characterised in that**
n groups (Gn) can be combined and/or are combined in k sections (Sk), wherein each section (Sk) comprises $m_k$ groups (Gn) with associated $m_k$ work setting devices (4), wherein all groups (Gn) of a section (Sk) have the common adjustable work setting.

4. Soil tillage implement (1) according to any one of claims 1 to 3, **characterised in that**
all groups (Gn) of a section (Sk) undergo an identical change in work setting by actuating the associated work setting device (4).

5. Soil tillage implement (1) according to claim 4, **characterised in that**
all groups (Gn) of a section (Sk) experience the same work setting change simultaneously by actuating the associated work setting devices.

6. Soil tillage implement (1) according to any one of claims 1 to 5, **characterised in that**

- the work settings of several sections (Sk) are the same, and/or
- the working settings of several sections (Sk) can be set dependent or independent of each other.

7. Soil tillage implement (1) according to any one of claims 1 to 6, **characterised in that**
the control unit (5) is intended and designed to control the work adjustment devices (4) fully automatically.

8. Soil tillage implement (1) according to any one of claims 1 to 7, **characterised in that**
the display and input device (6) and/or the control unit (5) are designed and intended to perform the combination of the groups (Gn) into sections (Sk) as a function of user inputs.

9. Soil tillage implement (1) according to claim 8, **characterised in that**
the user inputs are at least one selected from the group comprising

- Species of a crop to be cultivated;

- Row spacing of the crop to be cultivated;
- Growth stage of the crop;
- Degree of weed infestation;
- Track width of a tractor pulling the soil tillage implement (1).

10. Soil tillage implement (1) according to any one of claims 1 to 9,
**characterised in that**
a working setting is preset for each section (Sk), which can be set automatically.

11. Soil tillage implement (1) according to any one of claims 1 to 10,
**characterised in that**
an acoustic and/or haptic and/or visual signal can be emitted if the adjustable work setting of at least one group (Gn) and/or at least one section (Sk) is exceeded and/or not reached.

12. Soil tillage implement (1) according to any one of claims 1 to 11,
**characterised in that**
the sections (Sk) are predefined and stored in a memory unit.

13. Soil tillage implement (1) according to any one of claims 1 to 12,
**characterised in that**
the control unit (5) and/or the display and input unit (20) comprises a configuration mode, so that the groups (Gn) and/or sections (Sk) can be combination and/or configured by means of corresponding user inputs.

14. Method for adjusting a working setting of harrow tines (3) of a soil tillage implement (1) according to any one of claims 1 to 13,
comprising the process steps:

a) Divide the soil tillage implement (1) into groups (Gn);
b) Combining groups (Gn) into sections (Sk),
c) Specifying a target work setting for each section (Sk) and setting the actual work setting of each group of each section (Sk) if the actual work setting differs from the target work setting.

**Revendications**

1. Machine de travail du sol (1), de préférence une herse étrille agricole, ayant une structure de cadre (2) et ayant une pluralité de dents de herse (3) espacées les unes des autres, lesquelles sont disposées en plusieurs rangées et les unes derrière les autres, les dents de herse (3) étant aptes à pivoter par rapport à la structure de châssis (2) et chaque dent de herse (3) étant reliée à un dispositif de réglage de travail (4), les dents de herse (3) étant divisées en n groupes (Gn) par un $n^{ième}$ dispositif de réglage de travail (4), chaque groupe (Gn) comportant un dispositif de réglage du travail (4) et étant relié au dispositif de réglage de travail(4) associé, le dispositif de réglage de travail (4) étant prévu et conçu pour modifier un paramètre de travail des dents (3) du groupe (Gn) associé, la machine de travail du sol (1) comportant une unité de commande (5), laquelle est prévue et conçue pour commander les dispositifs de réglage de travail (4), les groupes (Gn) étant aptes à être rassemblés et/ou étant rassemblés en sections (Sk) d'une manière quelconque et/ou prédéfinie en fonction des conditions de travail présentes, une division de la machine de travail du sol (1) en sections étant modifiable, l'unité de commande (5) étant prévue et conçue pour effectuer un regroupement de groupes (Gn) en sections (Sk), et/ou il est prévu un dispositif d'affichage et d'entrée (6), lequel est relié à l'unité de commande au moins du point de vue de la technique du signal et lequel est conçu et prévu pour effectuer le regroupement des groupes (Gn) en sections (Sk) au moyen d'entrées utilisateur.

2. Machine pour le travail du sol selon la revendication 1,
caractérisé en par le fait qu'
un premier nombre de groupes (Gn) est apte à être associé à un deuxième nombre de sections (Sk), chaque section (Sk) comportant un sous-nombre de groupes (Gn) avec les dispositifs de réglage de travail (4) respectivement associés, tous les groupes (Gn) d'une section (Sk) présentant un paramètre de travail réglable commun.

3. Machine de travail du sol selon l'une des revendications 1 ou 2,
**caractérisé par le fait que**
n groupes (Gn) sont aptes à être rassemblés et/ou sont rassemblés en k sections (Sk), chaque section (Sk) comportant $m_k$ groupes (Gn) avec $m_k$ dispositifs de réglage de travail (4) associés, tous les groupes (Gn) d'une section (Sk) présentant le paramètre de travail réglable commun.

4. Machine de travail du sol (1) selon l'une des revendications 1 à 3,
**caractérisé par le fait que**
tous les groupes (Gn) d'une section (Sk) subissent un même changement de réglage de travail par un actionnement du dispositif de réglage de travail (4) associé.

5. Machine de travail du sol (1) selon la revendication 4,
**caractérisé par le fait que**
tous les groupes (Gn) d'une section (Sk) subissent simultanément un même changement de réglage de travail par un actionnement des dispositifs de réglage de travail associés.

6. Machine de travail du sol (1) selon l'une des revendications 1 à 5,
**caractérisé par le fait que**

 - les paramètres de travail de plusieurs sections (Sk) sont égaux entre eux, et/ou
 - les paramètres de travail de plusieurs sections (Sk) sont réglables de manière dépendante ou indépendante les uns des autres.

7. Machine de travail du sol (1) selon l'une quelconque des revendications 1 à 6,
**caractérisé par le fait que**
l'unité de commande (5) est prévue et conçue pour commander les dispositifs de réglage de travail (4) de manière entièrement automatique.

8. Machine de travail du sol (1) selon l'une quelconque des revendications 1 à 7,
**caractérisé par le fait que**
le dispositif d'affichage et d'entrée (6) et/ou l'unité de commande (5) sont conçus et prévus pour effectuer le regroupement des groupes (Gn) en sections (Sk) en fonction d'entrées utilisateur.

9. Machine de travail du sol (1) selon la revendication 8,
**caractérisé par le fait que**
les entrées utilisateur sont au moins l'une choisie dans le groupe comportant :

 - le type d'une culture à travailler ;
 - la distance entre les rangs de la culture à travailler ;
 - le stade de croissance de la culture à travailler ;
 - le degré d'une infestation par les mauvaises herbes ;
 - la largeur de voie d'un tracteur tirant la machine de travail du sol (1).

10. Machine de travail du sol (1) selon l'une des revendications 1 à 9,
**caractérisé par le fait que**,
pour chaque section (Sk), un paramètre de travail est prédéfini, lequel est réglable automatiquement.

11. Machine de travail du sol (1) selon l'une des revendications 1 à 10,
**caractérisé par le fait qu'**
en cas de dépassement et/ou de sous-dépassement du paramètre de travail réglable d'au moins un groupe (Gn) et/ou d'au moins une section (Sk), une indication acoustique et/ou haptique et/ou optique est apte à être émise.

12. Machine de travail du sol (1) selon l'une des revendications 1 à 11,
**caractérisé par le fait que**
les sections (Sk) sont prédéfinies et sont stockées dans une unité de mémoire.

13. Machine de travail du sol (1) selon l'une des revendications 7 à 12,
**caractérisé par le fait que**
l'unité de commande (5) et/ou l'unité d'affichage et d'entrée (20) comporte(nt) un mode de configuration, de sorte qu'un regroupement et/ou une configuration des groupes (Gn) et/ou des sections (Sk) est réalisable par des entrées utilisateur correspondantes.

14. Procédé de réglage d'un paramètre de travail de dents de herse (3) d'une machine de travail du sol (1) selon l'une des revendications 1 à 13, comportant les étapes de procédé suivantes :

 a) division de la machine de travail du sol (1) en groupes (Gn) ;
 b) regroupement de groupes (Gn) en sections (Sk) ;
 c) définition d'un paramètre de travail cible pour chaque section (Sk) et réglage du paramètre de travail réel de chaque groupe d'une section respective (Sk) si le paramètre de travail réel diffère du paramètre de travail cible.

Fig. 1

Fig. 2

Fig. 3

FR

100

17

18

4

100

2

a

19

3

Fig. 4

20

G1.......10%
G2.......15%
G3.......10%
G4........15%
G5.......15%
G6......15%
G7......10%
Gn......XX%

G1 G2 G3 G4 G5 G6 G7 Gn

5

4 — G1    G2 — 4    G3 — 4 · · · ·

Fig. 5

Fig. 6

Fig. 7

**IN DER BESCHREIBUNG AUFGEFÜHRTE DOKUMENTE**

**In der Beschreibung aufgeführte Patentdokumente**

- DE 102007008616 A1
- DE 19831911 A1
- EP 3903549 A1
- EP 2868177 A1